(19) **Europäisches Patentamt / European Patent Office / Office européen des brevets**

(11) **EP 4 755 588 A1**

(12) **EUROPEAN PATENT APPLICATION**

(43) Date of publication:
**10.06.2026 Bulletin 2026/24**

(21) Application number: **24218366.3**

(22) Date of filing: **09.12.2024**

(51) International Patent Classification (IPC):
**B25J 9/00** (2006.01) **B25J 9/16** (2006.01)
**B25J 9/10** (2006.01)

(52) Cooperative Patent Classification (CPC):
**B25J 9/1615; B25J 9/0015; B25J 9/106**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ECOLE POLYTECHNIQUE FEDERALE DE LAUSANNE (EPFL)**
**1015 Lausanne (CH)**

(72) Inventors:
• **TISSOT-DAGUETTE, Loïc**
  **1400 Yverdon-les-Bains (CH)**
• **HENEIN, Simon**
  **2000 Neuchâtel (CH)**
• **COSANDIER, Florent**
  **2300 La Chaux-de-Fonds (CH)**
• **VALLAT, Celestin**
  **2054 Chézart-St-Martin (CH)**

(74) Representative: **e-Patent SA**
  **Rue Saint-Maurice 12**
  **Case postale**
  **2001 Neuchâtel 1 (CH)**

(54) **ONE DEGREE OF FREEDOM LINEAR STAGES WITH MINIMISED PARASITIC SHIFT**

(57)     Rectilinear stage (1) with substantially a single degree of freedom in translation along a first axis (X), comprising:
- a movable element (3) arranged to translate in a plane (XY) along said first axis with respect to a frame (18);
- a first arm (5) pivotally attached at its first extremity to said movable element and at its second extremity to a first rigid link (11) arranged to pivot about a first frame hinge (17) provided on said frame;
- a second arm (7) pivotally attached at its first extremity to said movable element and at its second extremity to a second rigid link (13) arranged to pivot about a second frame hinge (19) provided on said frame;
- a third arm (9) pivotally attached at its first extremity to said movable element and at its second extremity to a third rigid link (15) arranged to pivot about a third frame hinge (21) provided on said frame;
wherein
- two of said arms are attached on a first side of said movable element, a further one of said arms being attached on a second side of said movable element opposite to said first side, considered in said plane;
- at least two of said arms have substantially the same effective length;
- with said movable element in a neutral position, said arms functionally extend in mutually-parallel directions;
- said first and second rigid links are rotationally coupled by a first coupler (23) pivotally connected to each of said first and second rigid links,
- said third rigid link is rotationally coupled to another rigid link by a second coupler (25) pivotally connected to each of said third rigid link and said other rigid link,
- said first arm, said second arm, said third arm, said first rigid link, said second rigid link, said third rigid link, said first coupler and said second coupler being configured such that an angle of rotation of each of said rigid links about its respective frame hinge is of substantially equal magnitude in response to a displacement of said movable element along said first axis.

Figure 1

## Description

## Technical field

The present invention relates to the field of flexure mechanisms. More particularly, it relates to one degree of freedom planar linear stages with minimised parasitic shift in or around other axes than that of the desired linear degree of freedom.

## State of the Art

Flexure-based linear stages are commonly used in precision mechanisms as they can provide an accurate and repeatable translational motion of mechanical elements. Their absence of solid friction, wear, lubrification and backlash as well as the possibility of monolithic manufacturing makes flexure linear stages highly beneficial for positioning systems. However, classic compliant mechanisms also present drawbacks, such as a limited stroke relative to its overall volume envelope, low stiffness in the support directions and/or undesirable parasitic motions.

Compliant linear stages having minimized parasitic shift are often based on exact or approximate straight-line motion linkages where the joints are replaced by flexures, as described in Cosandier F, Henein S, Richard M and Rubbert L, 2017, The Art of Flexure Mechanism Design, EPFL Press, Lausanne. A simple example of such a linear stage is a Watt's linkage, in which the movable element is guided by two flexures on opposite sides thereof and linearly offset parallel to the degree of freedom in the X direction. This arrangement is simple and has a reasonably low stiffness in the X direction, but suffers from parasitic rotations about the Z direction that are often of second-order with respect to the displacement along the X direction applied at the vicinity of the neutral position. A two-flexure X translation stage with two parallel flexures arranged on the same side of the movable element suffers less from parasitic rotations about the Z direction, but at the cost of a second-order parasitic translation in the Y direction, perpendicular to the X direction.

An example of a linear one degree of freedom stage which is exempt from parasitic motion is a so-called overconstrained X translation stage, in which the movable element is guided by four flexures arranged in coaxial pairs so as to be mirror symmetrical about two perpendicular axes. These flexures may be simple blade flexures, pairs of notch flexures joined by rigid bars or similar (e.g. short blade flexures joined by rigid bars). This symmetrical arrangement ensures that substantially no parasitic motion perpendicular to the X direction, or around the Z direction, is possible, however this comes at the cost of relatively high stress in the flexures, a nonlinear force-displacement characteristics, and a relatively low stroke.

A second approach is to compensate the parasitic motion of the rigid-body linkage kinematics with the parasitic shift of its flexural joints, such as, for instance, described in Tissot-Daguette L, Schneegans H, Gubler Q, Baur C and Henein S, 2022, Rectilinear translation four-bar flexure mechanism based on four Remote Center Compliance pivots, euspen's 22nd International Conference & Exhibition, Geneva, CH

Nevertheless, parasitic motion compensation is usually only valid for relatively small strokes. A third method is to symmetrize the structure of such a linear stage to force the moving platform to exhibit a straight-line motion, such as that described in Hubbard N B, Wittwer J W, Kennedy J A, Wilcox D L and Howell L L, 2004, A novel fully compliant planar linear-motion mechanism, ASME 2004 International Design Engineering Technical Conferences and Computers and Information in Engineering Conference, Utah, USA. However, these structures are overconstrained, thus high stress is involved in the flexures which drastically reduces the range of motion of the stage.

Another, very simple, example of a linear one degree of freedom stage which is exempt from parasitic motion is a so-called underconstrained X translation stage in which the movable element is guided by two parallel flexure stages connected in series with opposite Y direction such that their respective parasitic shifts compensate. This arrangement ensures that substantially no parasitic motion perpendicular to the X direction, or around the Z direction, is possible, however this comes at the cost of a significantly low support stiffness in the Y direction and potential vibrations due to an internal degree of freedom.

The aim of the present invention is to at least partially overcome the above-mentioned disadvantages of the prior art, in which a relatively large stroke, relatively low stiffness in the degree of freedom and relatively high stiffnesses in other directions are obtained, without needing additional compensation mechanisms.

## Disclosure of the invention

More precisely, the invention relates to a rectilinear stage with substantially a single degree of freedom in translation along a first axis, as defined in claim 1. This rectilinear stage comprises:

- a movable element arranged to translate in a plane along said first axis with respect to a frame;
- a first arm pivotally attached at its first extremity to said movable element and pivotally attached at its second extremity to a first rigid link arranged to pivot about a first frame hinge provided on said frame, said first frame hinge and the pivotal attachment of the first arm to the other elements being typically defined by respective flexure pivots each comprising one or more elastic elements;
- a second arm pivotally attached at its first extremity to said movable element and pivotally attached at its second extremity to a second rigid link arranged to pivot about a second frame hinge provided on said frame, said second frame hinge and the pivotal attachment of the second arm to the other elements being typically defined by respective flexure pivots each comprising one or more elastic elements, but conventional pivot points are also possible, which indeed applies to all pivot points;

- a third arm pivotally attached at its first extremity to said movable element and pivotally attached at its second extremity to a third rigid link arranged to pivot about a third frame hinge provided on said frame, said third frame hinge and the pivotal attachment of the third arm to the other elements being typically defined by respective flexure pivots each comprising one or more elastic elements

Furthermore:

- two of said arms are attached on a first side of said movable element, a further one of said arms being attached on a second side of said movable element opposite to said first side, all of this being considered in said plane;
- at least two, preferably all, of said arms have substantially the same effective length, namely those arms which are coupled together;
- in a neutral position of said movable element, said arms functionally extend in mutually-parallel directions, that is to say that, irrespective of the actual shape of the arms, the line segments joining the pivotal attachment points of each arm to the movable body and the respective rigid link extend in mutually parallel directions, such that the effective direction of action of each arm is parallel;
- said first and second rigid links are rotationally coupled by a first coupler, directly or indirectly pivotally connected to each of said first and second rigid links,
- said third rigid link is rotationally coupled to another rigid link (which may be the first or second link, or a further rigid link, see below) by a second coupler, directly or indirectly pivotally connected to each of said third rigid link and said other rigid link,
- said first arm, said second arm, said third arm, said first rigid link, said second rigid link, said third rigid link, said first coupler and said second coupler being configured such that an angle of rotation of each of said rigid links about its respective frame hinge is of substantially equal magnitude in response to a displacement of said movable element along said first axis.

By these means, one of the arms substantially prevents parasitic translation in a direction perpendicular to the first axis, as well as rotation in said plane, without over-constraining it. In the case in which said rectilinear stage is based on flexures, the range of movement of the movable element along the first axis is relatively large, without incurring overly-high restoring force. Furthermore, the stiffness in the plane in a direction perpendicular to the first axis is relatively high, as is the out of plane stiffness and torsional stiffness.

That being said, parasitic displacements are not completely eliminated, but are significantly reduced compared to other non-over-constrained prior art arrangements, and the exact remaining parasitic displacement depends on the exact configuration of the arms, rigid links and couplers.

Ideally, when the movable element is in its neutral position, each arm is functionally perpendicular to its corresponding rigid link. In other words, a line segment extending through the effective two pivot points of the arm is perpendicular to a line segment extending through the pivot point between the arm and the corresponding rigid link and the frame hinge about which it rotates, this condition being observed for all arms. This minimises the parasitic shift perpendicular to the first axis and maximises the stiffness of the arrangement in the same direction.

In one configuration, said first arm and said second arm are attached to said first side of said movable element and said third arm is attached to said second side of said movable element, considered in said plane, said first coupler linking said first rigid link to said second rigid link, and said second coupler linking said third rigid link to said second rigid link. This arrangement is relatively compact, since it only contains three arms.

Advantageously, said first rigid link, said second rigid link and said first coupler are arranged as a parallelogram linkage. This ensures that the rotations of the first and second rigid links, which are on the same side of the movable element, are identical.

Advantageously, said second rigid link, said third rigid link and said second coupler are arranged as a parallelogram linkage or as an inverter linkage such as a Watt's linkage or a Kempe's Reversor. This choice enables a compromise: if these elements are arranged as a parallelogram linkage, there a slight parasitic translation of the movable element parallel to the Y axis, with an amplitude at the fifth-order in respect of the X (first axis) displacement: $y = -\frac{1}{8}\frac{1}{r_A^3 r_C}x^5 + \mathcal{O}(x^6)$ where $r_A$ and $r_C$ are respectively the length of said arms, and the distance between said second extremity of said arms and said frame hinge. Likewise, when arranged as a Watt's linkage, there is again a slight parasitic translation of the movable element parallel to the Y axis with an amplitude at the eighth-order in respect of the X (first axis) displacement: $y = \frac{1}{64}\frac{r_D}{w_D}\frac{1}{r_A^4 r_C^3}x^8 + \mathcal{O}(x^{10})$ where $r_D$ is the distance from the point of connection of said second rigid link and said second coupler to said second frame hinge, and $w_D$ is the length of said second coupler. It's worth noting that the latter equation only applies if $r_D$ and $w_D$ are perpendicular. Since Kempe's Reversors perform a perfect inversion of angular displacements, the Y axis parasitic shift is theoretically eliminated (i.e., y = 0).

Advantageously, said arms extend perpendicular to said first axis and said first coupler extends parallel to said first axis, when said movable element is in a neutral position. This arrangement maximises the stiffness in the XY plane perpendicular to the first axis, and reduces the stiffness in the X direction, since the first coupler does not act with a bending component and hence does not itself generate any restoring force.

In another configuration, said first arm and said second arm are attached to opposite sides of said movable element, considered in said XY plane, and wherein said rectilinear stage further comprises a fourth arm attached at its first extremity to said movable element and at its second extremity to a fourth rigid link arranged to pivot about a fourth frame hinge provided on said frame, said second coupler being pivotally attached to each of said third rigid link and said fourth rigid link. Compared to the three-arm configuration discussed above, such a four-arm arrangement could reduce the parasitic translation in the Y direction due to motion averaging at the centre of the two pairs of coupled arms, but this can imply a parasitic in-plane rotation. Furthermore, if the rectilinear stage is based on flexures, the forces applied by the flexures on the movable element compensate each other in the Y direction thanks to the symmetry of the four-arm arrangement which reduces its lateral and rotational parasitic shifts.

Advantageously, said first rigid link, said second rigid link and said first coupler are configured as a parallelogram linkage, said third rigid link, said fourth rigid link and said second coupler also being configured as a parallelogram linkage. Alternatively, said first rigid link, said second rigid link and said first coupler can be configured as an inverter linkage such as a Watt's linkage or a Kempe's Reversor, said third rigid link, said fourth rigid link and said second coupler being also configured as an inverter linkage, ideally of the same type. These options enable design compromise decisions to be taken according to the needs of the constructor, in terms of the use of space and also the degree of parasitic shift in the Y direction of each coupler, which is fifth-order for parallelogram linkages and eighth-order for Watt's linkages and perfect for Kempe's Reversors, in respect of displacement of the movable element parallel to the first axis (X). As noted before, this translational shift of the centre of said movable element (point O) can be decreased depending on how the couplers are placed relative to each other. Indeed, to minimize the parasitic shift of point O, a four-arm arrangement with parallelogram couplers should have a mirror symmetry (with respect to the Y axis) because the sub-mechanism based on a coupled pair of arms exhibits a parasitic shift with odd order (fifth order). Whereas a four-arm arrangement with Watt's linkage couplers should ideally have a rotational symmetry (with respect to the centre O) because the sub-mechanism based on a coupled pair of arms exhibits a parasitic shift with even order (eighth order). If two Kempe's linkage couplers are used to couple pairs of arms of a four-arm arrangement, these couplers can be evenly placed with either mirror or rotational symmetry, since Kempe's Reversor couplers do not imply parasitic shifts.

The use of one or more Kempe's Reversors for the inverter linkage(s) is particularly interesting, since they give a more perfect inversion than a Watt's linkage. In general, these comprise an auxiliary coupling link pivotally joining said coupler to the corresponding rigid link (i.e. a first auxiliary coupling link pivotally connected to each of the first coupler and the second rigid link, or a second auxiliary coupling link pivotally connected to each of the second coupler and the fourth rigid link), and an intermediate link pivotally attached to said coupler and to an intermediate frame hinge distinct from said frame hinges and arranged substantially in a straight line with the corresponding frame hinges. More specifically, a first intermediate frame hinge is arranged in a substantially straight line with said first and second frame hinges, and/or a second intermediate frame hinge is arranged in a substantially straight line with said third and fourth frame hinges.

In one variant, the intermediate frame hinge(s) is situated between the corresponding frame hinges (i.e. the first intermediate frame hinge is situated between the first and second frame hinges and/or the second intermediate frame hinge is situated between the third and fourth frame hinges). In such a case, the pivot points of the Kempe's Reversor define two squares when the rectilinear stage is in a neutral position. More particularly, these two squares are defined by:

- the first frame hinge, the first intermediate frame hinge, and the two pivot points of the first auxiliary coupler link; and/or the third frame hinge, the second intermediate frame hinge, and the two pivot points of the second auxiliary coupler link, as appropriate;
- the first intermediate frame hinge, the second frame hinge, and the two pivot points of the first coupler; and/or the second intermediate frame hinge, the fourth frame hinge, and the two pivot points of the second coupler, as appropriate.

In an alternative configuration, said intermediate frame hinge is situated outside of said corresponding frame hinges, i.e. the first intermediate frame hinge is situated further from the first frame hinge than the second frame hinge is situated from the first frame hinge and/or the second intermediate frame hinge is situated further from the third frame hinge than the fourth frame hinge is situated from the third frame hinge. In this configuration, the pivot points of said Kempe's Reversor define two similar isosceles trapezoids when said rectilinear stage is in a neutral position. More particularly, these trapezoids are defined by:

- the first frame hinge, the first intermediate frame hinge and the two pivot points of the first coupler; and/or the third frame hinge, the second intermediate hinge, and the two pivot points of the second coupler, as appropriate; and
- the second frame hinge, the first intermediate frame hinge, and the two pivot points of the first auxiliary coupler link; and/or the fourth frame hinge, the second intermediate frame hinge, and the two pivot points of the second auxiliary coupler link, as appropriate.

Advantageously, said first coupler and said second coupler are substantially parallel when said movable element is in a neutral position. Alternatively, said first coupler and said second coupler are substantially mirrored with respect to each other about a second axis perpendicular to said first axis, when said movable element is in a neutral position. The difference is rather a question of design, the constructor choosing one or the other configuration in order to best use the space available and/or to optimise the overall structural size.

Advantageously, said arms extend perpendicular to said first axis when said movable element is in a neutral position, which maximises stiffness of the stage in the Y direction.

Advantageously, said arms and said couplers are each one of: a simple blade flexure; a rigid bar provided with a flexure pivot at each extremity thereof.

Advantageously, said frame hinges, and also said intermediate frame hinges, if present, are configured as flexure pivots, preferably cross-spring flexure pivots. Indeed, a monolithic flexure-based implementation is possible, which may also be planar with a single thickness.

**Brief description of the drawings**

Further details of the invention will become more apparent upon reading the detailed description, in reference to the appended figures which illustrate:

- Figure 1: a schematic view of an embodiment of a rectilinear stage according to the invention, illustrated in a neutral position with ideal kinematics;
- Figure 2: a schematic view of the linear stage of figure 1, the movable element having been displaced in the X direction;
- Figure 3: a schematic view, analogous to that of figure 1, of a further embodiment of a rectilinear stage according to the invention;
- Figure 4: a schematic view, analogous to that of figure 2, of the embodiment of figure 3;
- Figure 5: a schematic view, analogous to that of figure 1, of a further embodiment of a rectilinear stage according to the invention;
- Figure 6: a schematic view, analogous to that of figure 1, of a further embodiment of a rectilinear stage according to the invention;
- Figure 7: a schematic view, analogous to that of figure 1, of a further embodiment of a rectilinear stage according to the invention;
- Figure 8: a schematic view of a monolithic flexure implementation of the embodiment of figure 1;
- Figure 9: a schematic view of a monolithic flexure implementation of the embodiment of figure 3;
- Figure 10: a schematic view of a monolithic flexure implementation of the embodiment of figure 6;
- Figure 11: a schematic view of a monolithic flexure implementation of the embodiment of figure 7;
- Figure 12: a variant of an embodiment of the implementation of figure 10;
- Figure 13: schematic illustrations of equivalent configurations of flexure pivots for ideal hinges;
- Figure 14: a variant of the implementation of figure 10;
- Figure 15: two graphs of parasitic displacements for the implementation of figure 14;
- Figure 16: A schematic illustration of a flexure implementation of the first rigid link, second rigid link and first coupler of figure 1, the first coupler being a simple blade flexure;
- Figure 16a: a graph of the difference in the error on the output angle for the arrangement of figure 16, for both an optimised and non optimised design;
- Figure 17: a schematic illustration similar to the first drawing of figure 16, wherein the first coupler is a rigid bar with a relatively short simple blade flexure at each of its extremities;
- Figure 18: schematic illustrations similar to figure 16 of the Watt's linkage coupler of either the second and third arms in figures 3 and 4 or the third and fourth arms in figure 6, for instance, with the second coupler being a simple blade flexure;
- Figure 18a : a graph of the difference in the error on the output angle for the arrangement of figure 18, for both an optimised and non optimised design;
- Figure 19: a schematic illustration similar to the first drawing of figure 18, wherein the second coupler is a rigid bar with a relatively short simple blade flexure at each of its extremities;
- Figure 20: a complete rectilinear stage applying the optimisation principles of figures 16-19 to the overall configuration of figure 12;
- Figure 21: a generalised represenation of the embodiments of figures 1-4;
- Figure 22: a generalised represenation of the embodiments of figures 5-7;
- Figure 23: a variant of the embodiment of figure 7, implementing Kempe's Reversors;
- Figure 24: a detail of part of the stage of figure 23, illustrating one of the Kempe's Reversors in a displaced state;
- Figure 25: a further variant of an embodiment of a rectilinear stage according to the invention, based on modified Kempe's Reversors;

- Figure 26: a flexure implementation of the embodiment of figure 25.

## Embodiments of the invention

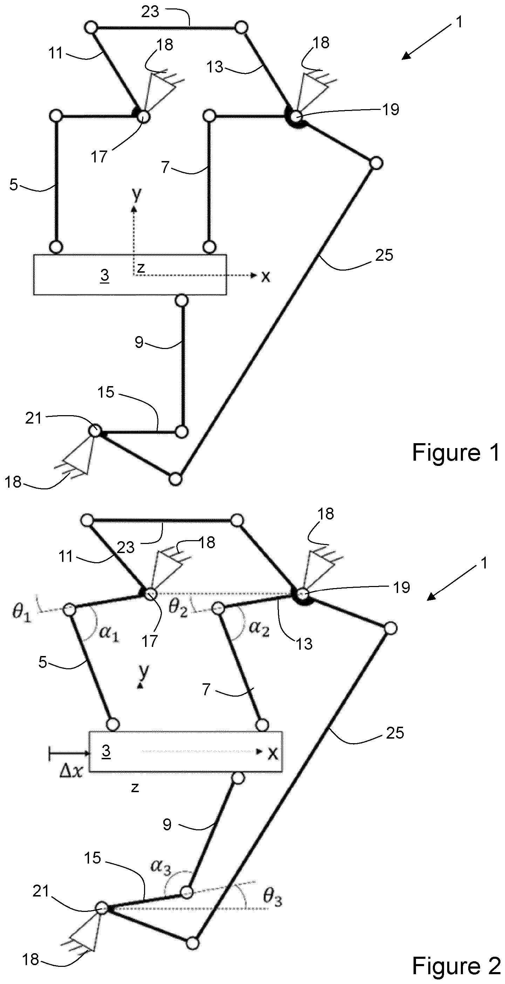

Figure 1 illustrates a schematic view of an embodiment of a rectilinear stage 1 according to the invention in its neutral position (i.e. with the stage 1 not deformed), with ideal kinematics, i.e. rigid links and ideal hinges.

Movable element 3 is substantially rigid and is arranged so as to have substantially one degree of freedom in translation, in the X-direction (left to right on the figure). By "substantially one degree of freedom", it is meant that the degree of freedom which is intended, parasitic displacements in the Y direction (perpendicular to X, up and down in the orientation of the figures), or in rotation about the Z direction (perpendicular to both X and Y, extending out of the page), not being excluded, but having a magnitude that is of second (or greater) order of motion with respect to the displacement in said degree of freedom.

Movable element 3 is guided by three arms, namely first arm 5, second arm 7 and third arm 9. First and second arm 5, 7 are attached at a respective first extremity to the movable element 3 on a first side thereof (considered with respect to the X axis), whereas third arm 9 is attached to the movable element 3 by a respective first extremity at a second side thereof (again considered with respect to the X axis), said first extremities being attached to the movable element 3 by respective hinges. The position of the hinge connecting the third arm 9 to the movable element 3 is unimportant, and may be aligned or not with one or other of the hinges connecting the first 5 or second 7 arms to the movable element 3.

The second extremities of the arms 5, 7, 9 are pivotably attached to respective first 11, second 13 and third 15 rigid links, by respective hinges, said rigid links being pivotally mounted on a support 18 via respective first 17, second 19 and third 21 frame hinges. The positions of the hinges which attach the arms 5, 7, 9 to the respective rigid links 11, 13, 15 are positioned such that a traction on the respective arm 5, 7, 9 results in a rotation of the respective rigid link 11, 13, 15 about the respective frame hinge 17, 19, 21.

First rigid link 11 is pivotally coupled to said second rigid link 13 via a first coupler 23, again such that a traction on the first coupler 13 causes a rotation of the rigid links 11, 13, and said third rigid link 15 is pivotally coupled with a second coupler 25 causing a rotation of the rigid links 13, 15. This pivotal coupling is naturally obtained by corresponding hinges situated at the extremities of the respective couplers 23, 25.

In order to minimize parasitic shifts in translation along the Y-axis and in rotation in the XY plane (i.e. about the Z axis), the following conditions should be observed:

- First arm 5 and second arm 7 are parallel to one another;
- Third arm 9 is rotated 180° with respect to the first and second arms 5, 7, and may have mirror symmetry with one of the first or second arms 5, 7;
- All three arms 5, 7, 9 have the same effective lengths, and ideally have identical dimensions and angles at the neutral position of the stage 1; and
- couplers 25, 27 form respective parallelogram linkages in combination with the corresponding rigid links 11, 13, 15.

In such a case, the mobile element 3 substantially cannot rotate in the XY plane because first coupler 23 constrains first and second arms 5, 7 to displace equally. Second coupler 25, together with third rigid link 15 and third arm 9, substantially prevents the mobile element from displacing in translation in the Y direction.

Further geometrical conditions can be added, in order to obtain further advantages, namely:

- for each arm 5, 7, 9, a line segment formed by the hinges situated at its extremities is perpendicular to the X axis when the stage 1 is in its neutral position, which maximises the support stiffness in the Y direction and around the Z direction;
- for each arm 5, 7, 9, the line segment formed by the hinge at its second extremity and the respective frame hinge 17, 19, 21 is parallel to the X axis when the stage 1 is in its neutral position, which reduces the stiffness constant of the stage 1 in the X direction since rotation about the frame hinges 17, 19, 21 is second-order with respect to the displacement of the movable element 3 in the X direction.

Figure 2 illustrates the stage 1 of figure 1 when the movable element 3 has been displaced parallel to the X direction by a distance x, which has engendered a rotation of the rigid links 11, 13, 15 in an anticlockwise direction about their respective frame hinges 17, 19, 21 with an equal angle $\theta_1 = \theta_2 = \theta_3$. There is a slight parasitic translation of the movable element 3 parallel to the Y axis, with an amplitude at the fifth order with respect to its X displacement, since second and third arms 7, 9 do not displace equally, but there is no parasitic rotation in the XY plane since first and second arms 5, 7 do displace equally. As a result, the variation of $\alpha_2$ (as used on this figure) is not totally equal to the variation of $\alpha_3$, and $\alpha_1 = \alpha_2$.

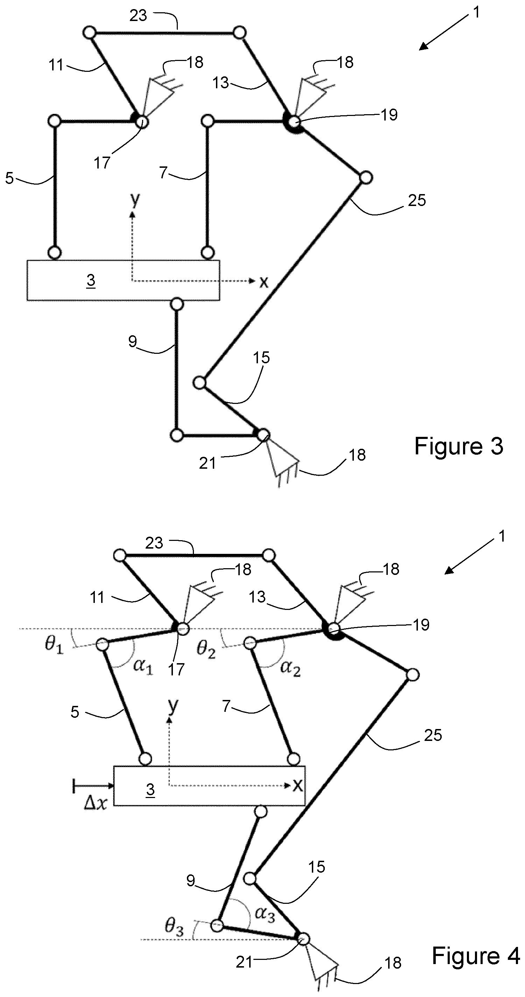

Figures 3 and 4 illustrate, analogously to figures 1 and 2 respectively, a further embodiment of a rectilinear stage 1 according to the invention, which will be described in terms of how it differs from that of figures 1 and 2, all other considerations remaining the same.

Second coupler 25, in cooperation with second rigid link 13 and third rigid link 15, is arranged as an inverter linkage, namely a Watt's linkage, and the relationship between the third rigid link 15 and the third arm 9 has been changed such that, when the movable element 3 is displaced to the right (according to the orientation of the figures), and the first and second rigid links 11, 13 pivot anticlockwise about their respective frame hinges 17, 19, third rigid link 15 pivots clockwise about the third frame hinge 21. The arrangement of the rigid links 13, 15 as a Watt's linkage hence acts as an inverter, which applies equally to every mention of a Watt's linkage in the detailed description.

As opposed to a parallelogram linkage arrangement of second coupler 25 with the second and third rigid links 13, 15 of figures 1 and 2, a Watt's linkage coupler is an imperfect inverter and cannot kinematically offer a constant transmission ratio between the second and third frame hinges 19, 21, i.e. the rotation angle $\theta_3$ about the third frame hinge 21 is slightly different from rotation angle $\theta_1$, $\theta_2$ about the first and second frame hinges 17, 19, i.e. $\theta_2 \approx \theta_3$. This induces a slight parasitic translation of the moving rigid block along the Y axis, and $\alpha_2 \approx \alpha_3$, resulting in the second and third arms 7, 9 not having the exact same displaced state. Similarly as for the embodiment of figures 1 and 2, there is no parasitic plane rotation because first and second arms 5, 7 displace equally ($\theta_1 = \theta_2$, $\alpha_1 = \alpha_2$).

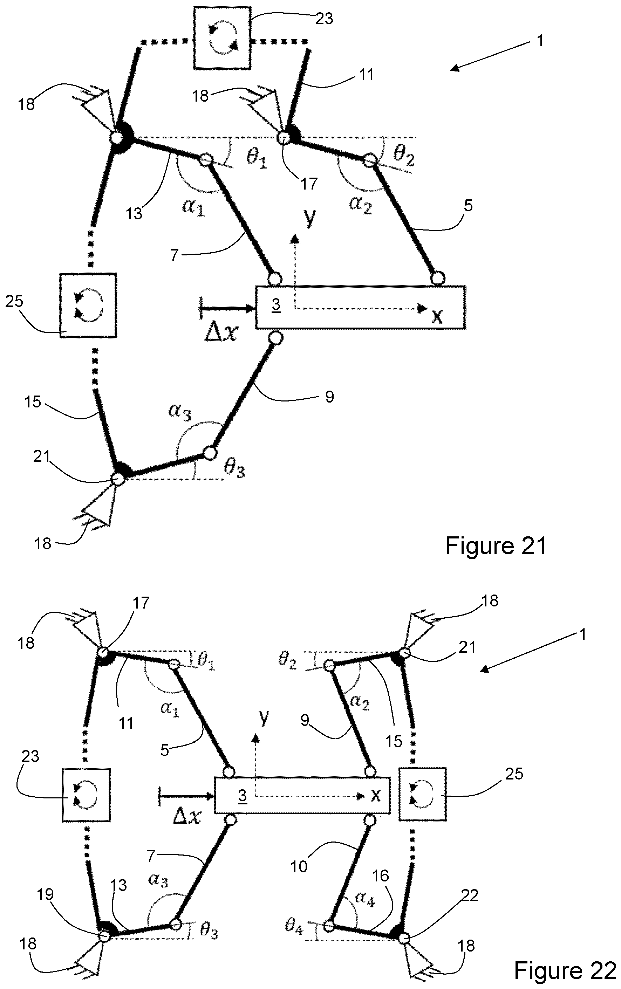

More generally, figure 21 illustrates the embodiments of figures 1-4 in generic form, in which the couplers 23 and 25 are illustrated generically. In the ideal case, first coupler 23 together with the first and second rigid links 13, 15 form a parallelogram linkage generating equal angular rotations in the same direction, i.e. $\theta_1 = \theta_2$, and second coupler 25 together with the second and third rigid links 15, 17 forms a perfect inverter, such that, $\theta_1 = -\theta_3$ (i.e. the same angle but in the opposite direction), and $\alpha_1 = \alpha_2 = \alpha_3$.

As before, first coupler 23 constrains first arm 5 and second arm 7 to displace equally, and second coupler 25, together with the third arm 9, prevents the movable element 3 from moving in the Y direction.

It should also be noted that the types of linkage arrangements mentioned above are not limiting, and any convenient types reproducing the desired functionality with suitably low degrees of imperfectness for the exact role can be used. Indeed, a Kempe's Reversor can be used, as will be described below in the context of other embodiments.

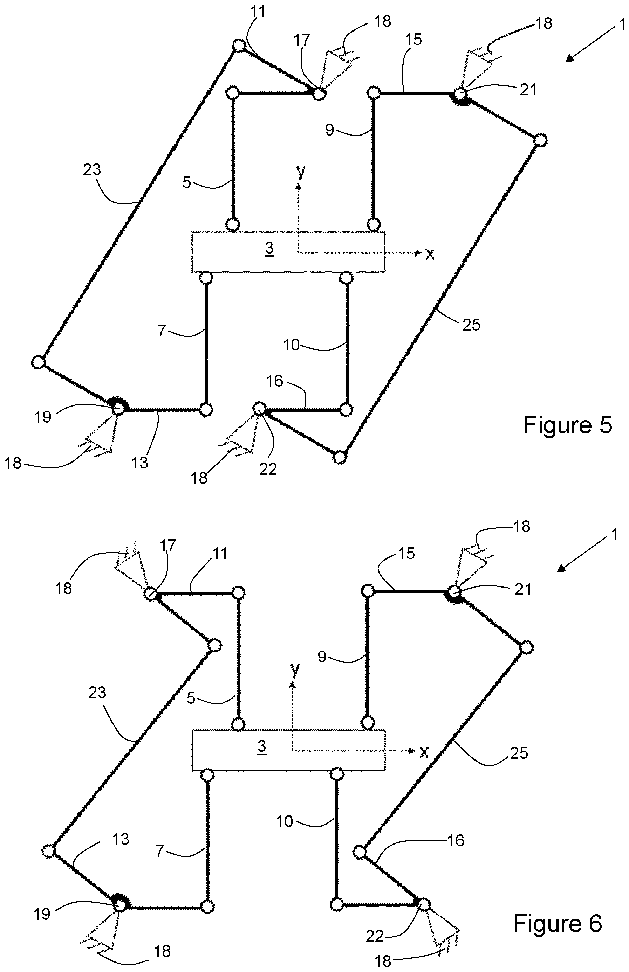

Figure 5 illustrates a further embodiment of a rectilinear stage 1 according to the invention. This differs from those presented previously in that a fourth arm 10 is provided, such that each side of the movable element 3 is supported by two parallel arms, first arm 5 and third arm 9 being provided in the XY plane on a first side thereof, second arm 7 and fourth arm 10 being provided on a second side thereof, opposite to said first side. Fourth arm 10 is, in analogy to the other arms 5, 7, 9, pivotally mounted on a fourth rigid link 16 arranged to pivot about a fourth frame hinge 16.

As before, the first rigid link 11 and second rigid link 13 are coupled together by first coupler 23, said first rigid link 11, second rigid link 13 and first coupler 23 together forming a parallelogram linkage. Third rigid link 15 is coupled to fourth rigid link 16 via second coupler 25, these three components 15, 16, 25 again forming a parallelogram linkage.

In general, in such a situation, at least two couplers 23, 25 must be used, and at least one of these must connect two 180° rotated or reversed arms 5, 6, 9, 10, in order to block the degree of freedom in the Y direction.

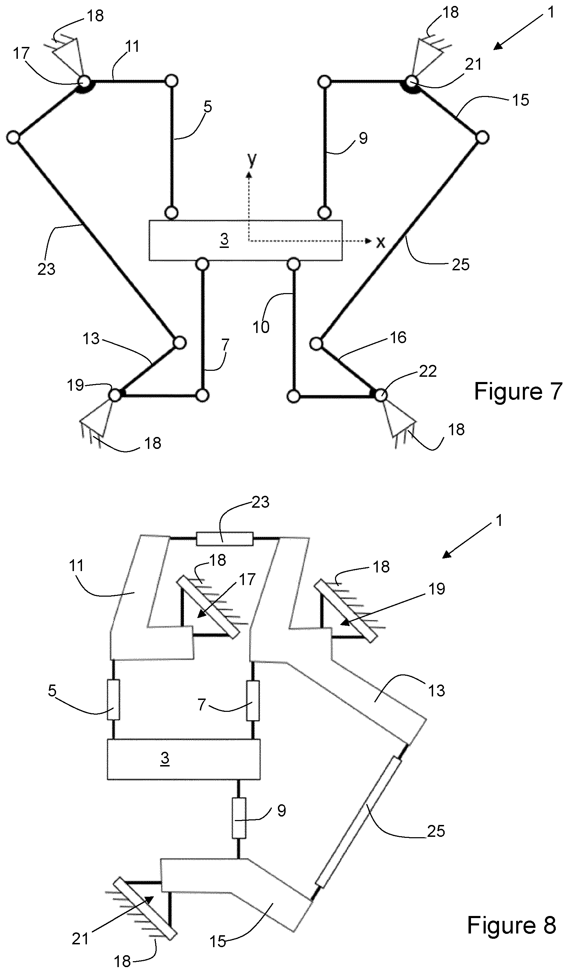

Figure 6 illustrates a further embodiment of a rectilinear stage 1 according to the invention, which differs from that of figure 5 in that the first rigid link 11, second rigid link 13 and first coupler form an inverter linkage, namely a Watt's linkage, as do the third rigid link 15, fourth rigid link 16 and second coupler 25. In this arrangement, the couplers 23, 25 are parallel, but they may also be mirrored as illustrated in figure 7, which illustrates a further embodiment of a rectilinear stage 1 according to the invention differing from that of figure 6 only in respect of the arrangements of the Watt's linkages formed by the respective rigid links 11, 13, 15, 1 and couplers 23, 25.

Figure 22, analogously to figure 21, illustrates the embodiments of figures 5-7 generically, in a displaced position. When first rigid link 11, second rigid link 13 and first coupler 23 form a perfect inverter, and likewise third rigid link 15, fourth rigid link 16 and second coupler 25 also form a perfect inverter, $\theta_1 = -\theta_3$ (i.e. same angle in the opposite direction), $\theta_2 = -\theta_4$ (idem), $\alpha_1 = \alpha_3$ and $\alpha_2 = \alpha_4$. However, in the practical case of figure 5, each pair of coupled arms 5, 7, respectively 9, 10, don't displace equally, and hence $\theta_2 = \theta_3$, $\alpha_2 \approx \alpha_3$, $\theta_1 = \theta_4$, $\alpha_1 \approx \alpha_4$. In the case of figure 6, which implements Watt's linkages, $\theta_2 \approx \theta_3$, $\alpha_2 \approx \alpha_3$, $\theta_1 \approx \theta_4$, $\alpha_1 \approx \alpha_4$.

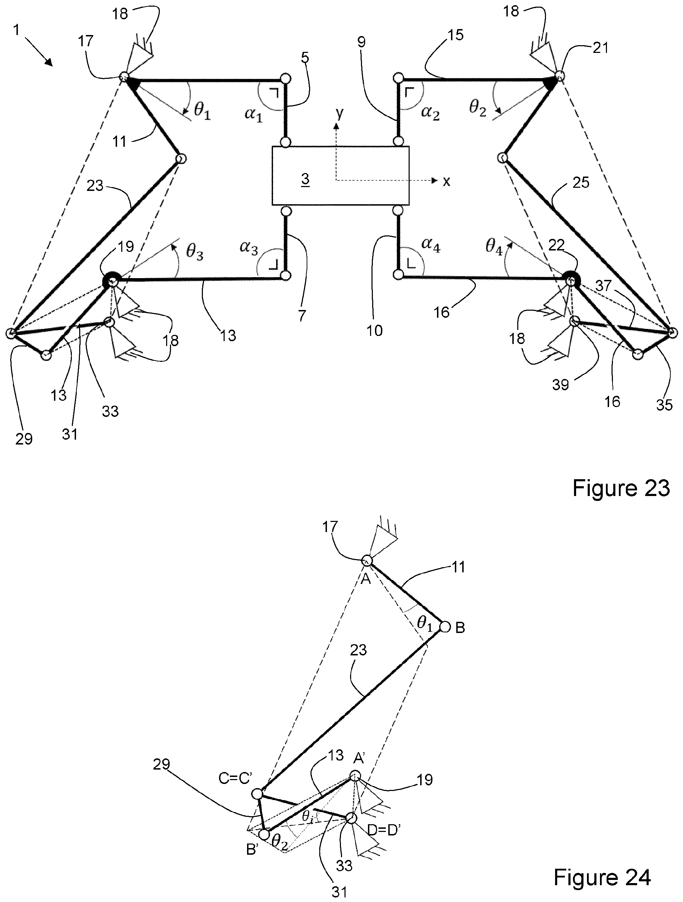

Another variant of the embodiment of figure 7 is illustrated in figure 23 in a neutral position. In this variant, the Watt's linkages of figure 7 have been replaced by different inverter linkages, namely Kempe's Reversors, as described in KEMPE, Alfred Bray, How to draw a straight line: a lecture on linkages, Macmillan and Company, 1877, pp. 40-41, figure 31. This inverter linkage is closer to perfect than the Watt's linkage of figure 7, and its application results in each of the couplers 23, 25 being attached to the corresponding rigid link 13, 16 indirectly, as will be described below in reference to the left-side of figure 23, i.e. in respect of the first coupler 23 and second rigid link 13. The same considerations apply, mutatis mutandis, to the second coupler 25 and the second rigid link 16. This left-side Kempe's Reversor linkage is isolated in figure 24, where it is illustrated in a state displaced from its neutral position.

The extremity of the first coupler 23 is pivotally mounted to a first auxiliary coupling link 29, itself pivotally mounted to the second rigid link 13, the same extremity of the first coupler being furthermore pivotally mounted to a first intermediate link 31, itself pivotally attached to a first intermediate frame hinge 33, which is situated at a predetermined distance from the frame hinge 19. First frame hinge 17, second frame hinge 19 and first intermediate frame hinge 33 are arranged substantially in a straight line, with the second frame hinge 19 situated between the first frame hinge 17 and the first intermediate frame hinge 33. Furthermore, the first intermediate link 31 crosses the second rigid link 13, in a different plane thereto at least at the crossing point, and is pivoted on the first coupler 23 coaxially but independently to the first auxiliary coupling link. Alternatively, these two elements 31, 13 can be situated in the same plane, the second rigid link 13 being arranged to go around the first intermediate link 31.

In terms of the geometry of the various elements concerned, a Kempe's Reversor is arranged as two inverse parallelogram mechanisms based on isosceles trapezoids ABCD and A'B'C'D' (when the stage 1 is in its neutral position), illustrated with large and small dashes. A is the rotational axis of the first frame hinge 17, A' is the pivoting axis of the second frame hinge 19, B is the pivoting axis between the first rigid link 11 and the first coupler 23, B' is the pivoting axis between the first auxiliary coupling link 29 and the second rigid link 13, C and C' are the pivoting axis between the first coupler 23 and both of the first auxiliary coupling link 29 and first intermediate link 31, D and D' are the pivoting axis of the first intermediate frame hinge 29. Each of ABCD and A'B'C'D' are similar (i.e. have the same respective angles at each of their vertices). This type of inverter works by first inverting the angle between the second rigid link 13 and the first intermediate link 31. Though this inversion is not perfect ($\theta_i = \theta_1 + \varepsilon$), the resulting angular error is corrected by coupling the first intermediate link 31 with the second rigid link 13 ($\theta_i = \theta_2 + \varepsilon$). This dual inversion compensates the error and results in substantially exact angle inversion ($\theta_2 = \theta_1$).

On the right-hand side of figure 23, second auxiliary coupling link 35, second intermediate link 37 and second intermediate frame hinge 39 are arranged in mirror image to the first auxiliary coupling link 29, first intermediate link 31 and first intermediate frame hinge 33 respectively, and function analogously thereto. Although the two Kempe's Reversors are illustrated as mirror images of each other, this is not essential since different geometries are possible provided that they constitute substantially perfect inverters (i.e. if they met the Kempe's Reversor conditions).

Such a configuration of a Kempe's Reversor can also be applied to the embodiment of figure 4, in replacement of the Watt's Linkage formed by second rigid link 13, second coupler 25 and third rigid link 15.

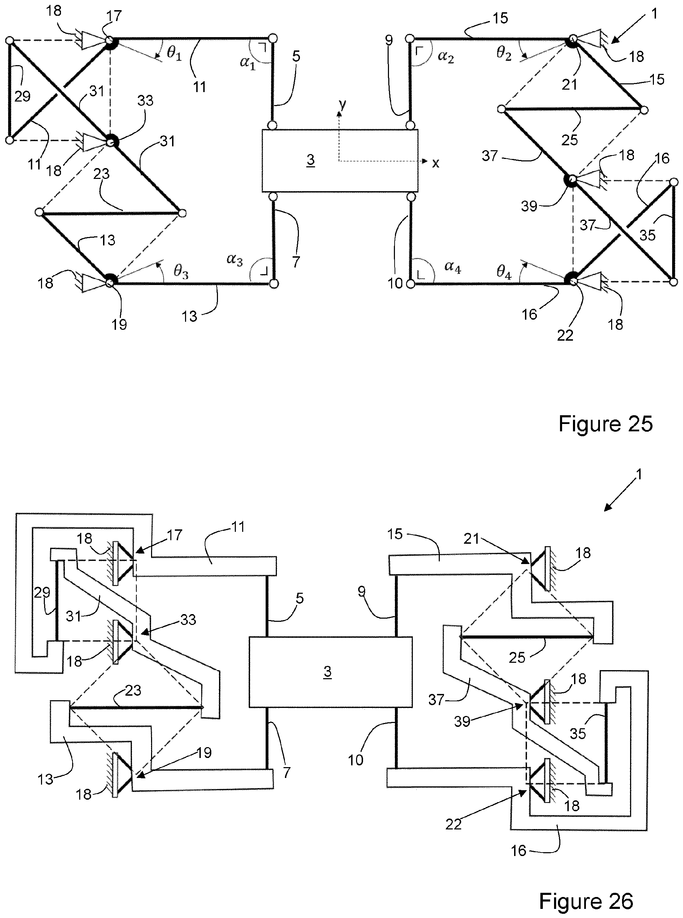

Figure 25 illustrates a further embodiment of a rectilinear stage 1 according to the invention, based on modified Kempe's Reversors. This embodiment differs from that of figure 23 in that the arrangement is rotationally-symmetrical rather than mirror-symmetrical, and the first intermediate frame hinge 33 is situated between the first and second frame hinges 17, 19, and the second intermediate frame hinge 39 is situated between the third and fourth frame hinges 21, 22. The intermediate links 31, 37 hence extend either side of the respective intermediate frame hinges 33, 39, and the similar trapezoids of figures 23, 24 are replaced by square configurations as indicated with dashed lines. This arrangement allows for an easier construction in a flexure implementation than the configuration of figure 23.

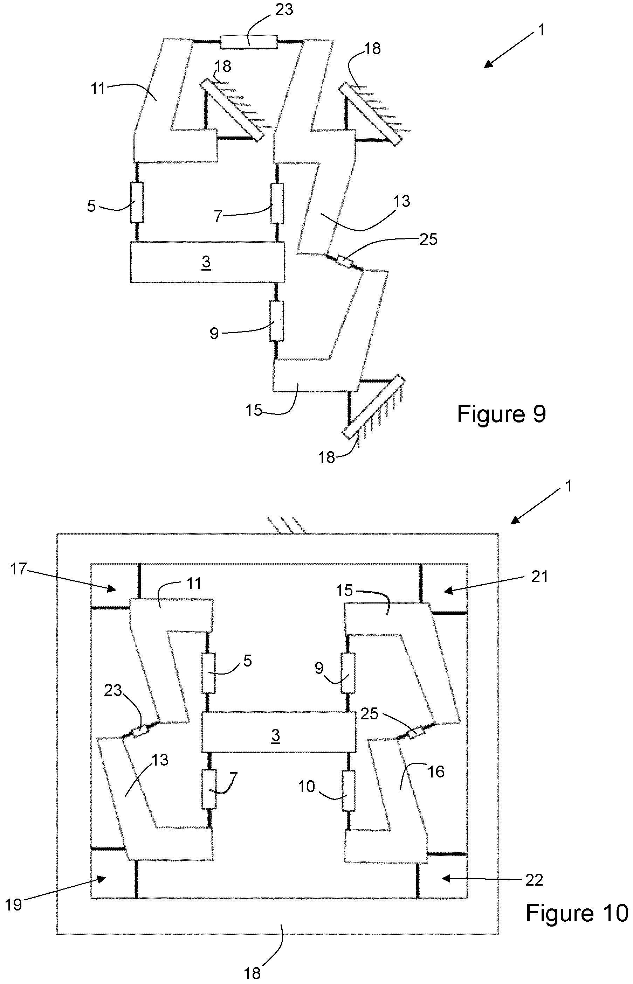

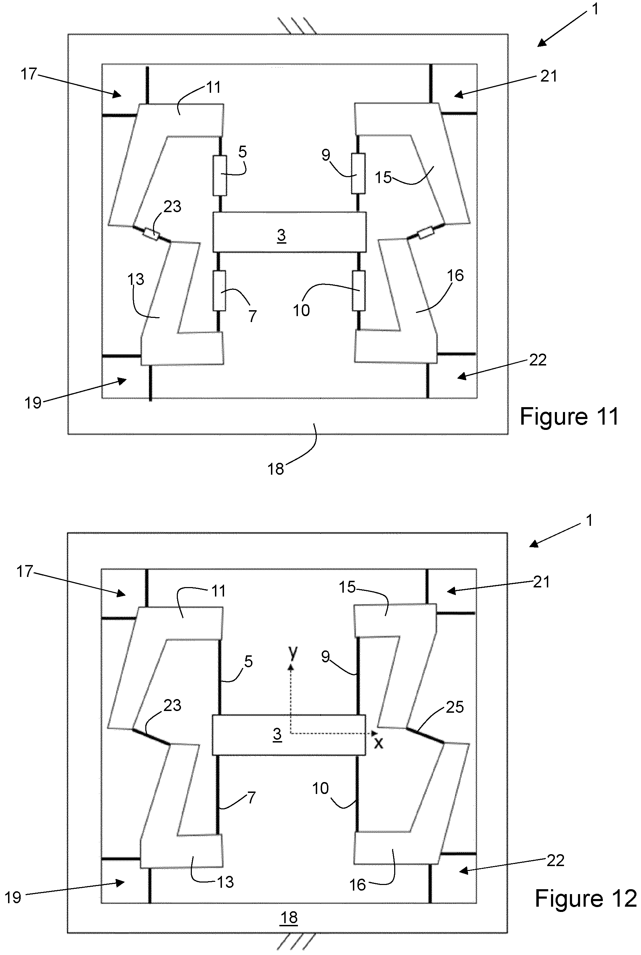

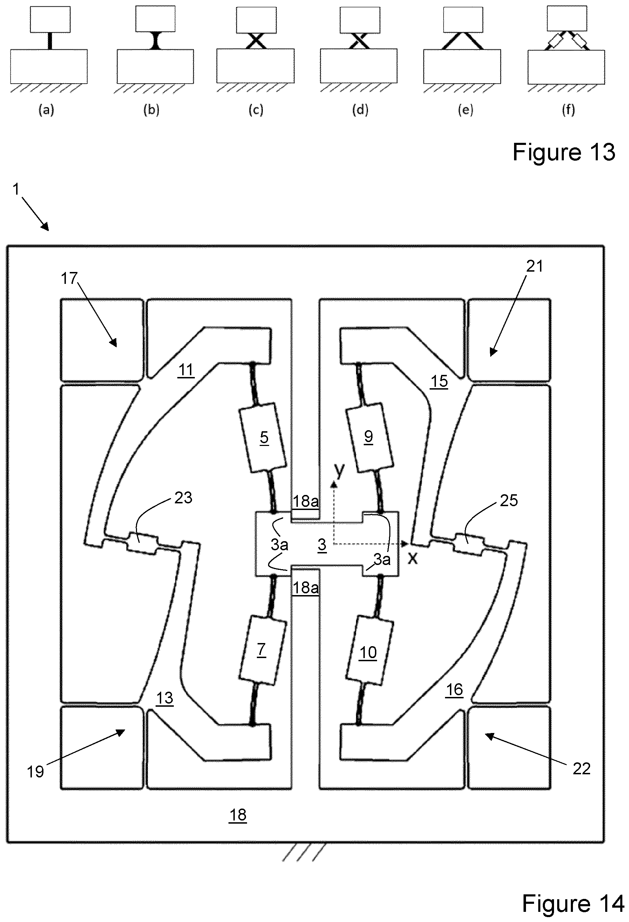

Figure 8 illustrates a monolithic flexure-based embodiment of the rectilinear stage 1 of figure 1, which forms a further embodiment of the invention. Each of the arms 5, 7, 9 and couplers 23, 25 is formed as a substantially rigid bar with a relatively short blade flexure at each end to form the respective hinges, although equivalent flexible elements are also possible (see figure 13). Furthermore, each of the frame hinges 17, 19, 21 is formed as a cross-spring flexure pivot, but other types of flexure pivots are also possible, including so-called Remote Centre of Compliance (RCC) pivots or any of those illustrated on figure 13. Figure 9 likewise illustrates a monolithic flexure-based embodiment of the rectilinear stage of figure 3, figure 10 illustrates a monolithic flexure-based embodiment of the rectilinear stage of figure 6 , figure 11 illustrates a monolithic flexure-based embodiment of the rectilinear stage of figure 7,

Figure 12 illustrates a further embodiment of the invention, which is a variant of the embodiment of figure 10 in which each of the arms 5, 7, 9, 10 and couplers 23, 25 is configured as a simple blade flexure, the construction having been mirrored about the Y axis. It should also be noted that any combination of simple blade flexures and rigid beams with short blade flexures at each extremity is possible.

In terms of other variations, figure 13 illustrates variants of flexures which can be used for any of the ideal hinges illustrated in figures 1-7. These variations are well-known in the art and need not be discussed in detail.

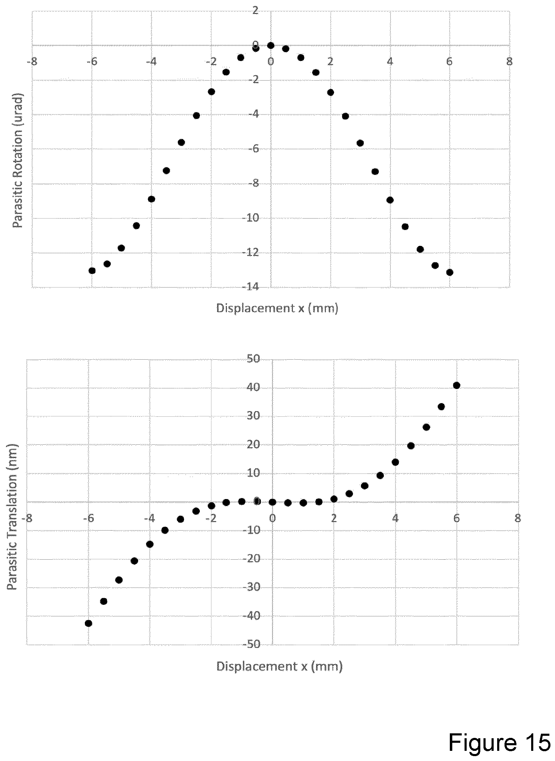

Figure 14 illustrates a variant of the embodiment of figure 10 in a deflected position, mirrored about the Y axis and further provided with abutments 3a, 18a provided respectively on the movable element 3 and the frame 18 in order to limit displacement of the movable element 3 in the X direction. The symmetry of the flexure arrangement enables parasitic shift in rotation in the XY plane and in translation in the Y direction can be minimised, but even without extensive dimensional optimisation, the stage 1 has extremely low parasitic shifts, as illustrated in the graphs of figure 15, of which the upper graph shows parasitic rotation in the XY plane as a function of translation of the movable element 3 in the X direction, the lower graph showing the corresponding parasitic translation in the Y direction. As can be seen from these graphs, even at a displacement of 6 mm, the parasitic rotation in the XY plane is a mere 13 microradians, and the parasitic translation in the Y direction is only around 40 nm, i.e. around 6.7 parts per million.

The out-of-plane stiffness of the stage 1 as illustrated in figure 14 is elevated thanks to the high parallelism of the structure. Furthermore, the lateral stiffness in the Y direction is high because the force in the arms 5, 7, 9, 10 is parallel to their longitudinal axes.

For all of the stages 1 discussed above, the design of the couplers 23, 25 can be optimised in order to minimize the parasitic shift of the movable element 3. In general, it is more beneficial to use a parallelogram linkage to couple two arms 5, 7, 9, 10 that are parallel to each other (for example first arm 5 and second arm 7 in figure 1), and a Watt's linkage or Kempe's Reversor to couple two arms that are mirrored by an axis parallel to the X axis (e.g. second arm 7 and third arm 9 in Figure 3). For parasitic shift minimization, a parallelogram linkage is less interesting to couple two arms that are rotated by 180° (e.g. second arm 7 and third arm 9 in figure 1), or alternatively to use a Watt's linkage or Kempe's Reversor to couple two arms that are mirrored by an axis parallel to the y-axis. Indeed, the stage 1 presented in figures 1-2 exhibits a fifth-order parasitic shift whereas the parasitic shift of the stage 1 presented in figures 3-4 performs a eighth-order parasitic shift with respect to the translation in the X direction.

For parasitic shift minimization, the transmission ratio between the rotation angles of two coupled frame hinges 17, 19, 21, 22 should be equal to 1 and -1 respectively for parallelogram and Watt's linkage or Kempe's Reversor couplers. In addition, this transmission ratio should remain as constant as possible with respect to the secondary hinge rotation angle.

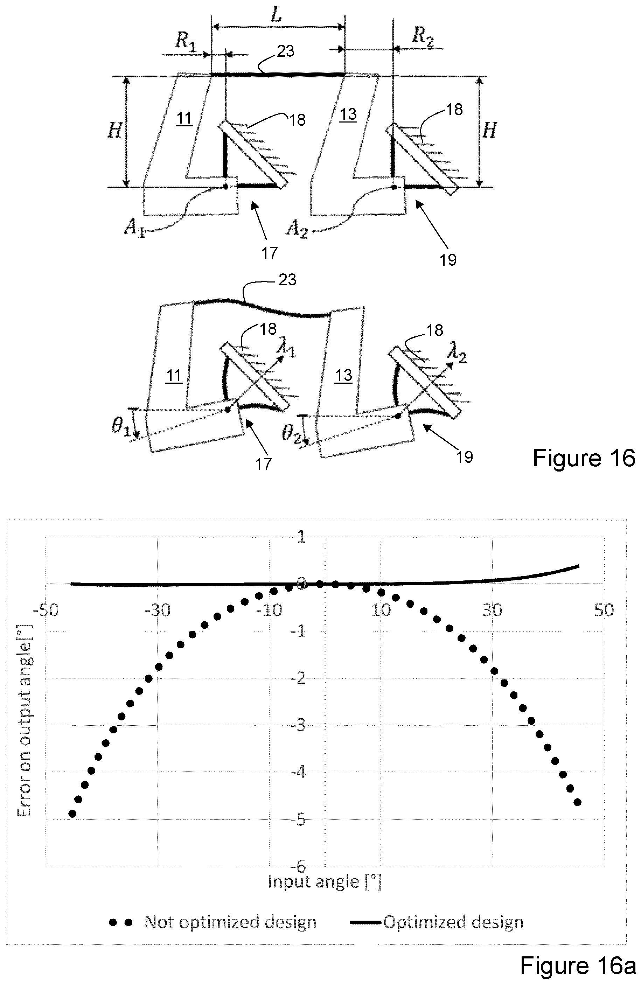

When based on ideal hinges (i.e., without parasitic shit of their axis of rotation), a parallelogram coupler (see for instance the relationship between first rigid link 11, second rigid link 13 and first coupler 23 in figure 1) performs a constant transmission ratio equal to 1 (as long as singularities are avoided). Since the transmission ratio of the parallelogram coupler is constant, its neutral position can be arbitrarily selected. However, it is advisable that the parallelogram coupler forms a rectangle at neutral position to minimize the forces transmitted through the coupling rigid link. When displaced, the transmission ratio of such a parallelogram coupler is constant and equal to 1, see Fig. 16.

A Watt's linkage coupler (e.g. that formed by second rigid link 13, third rigid link 15 and second coupler 25 of figure 3) should be shaped such that, kinematically, the line segments extending between the respective frame hinge 19, 21 and the effective pivot point between the respective rigid links 13, 15 and the coupler 25 are both orthogonal to the central line segment joining the effective pivot points at each end of the coupler 25 when the stage 1 is in its neutral position, as shown in figure 3. When deformed, the Watt's linkage coupler has a fourth order nonlinearity of its transmission ratio (i.e., $\theta_3 - \theta_2 \propto$ $\theta_2^4$ ), see figure 4. This nonlinearity implies an eighth order parasitic translation (i.e. $y \propto x^8$) for stages 1 similar to the one presented in figures 3-4 since the rotations $\theta_1$, $\theta_2$ and $\theta_3$ are all proportional to the square of the stage displacement $x$. This parasitic shift can be considered negligible for most applications of the stage 1.

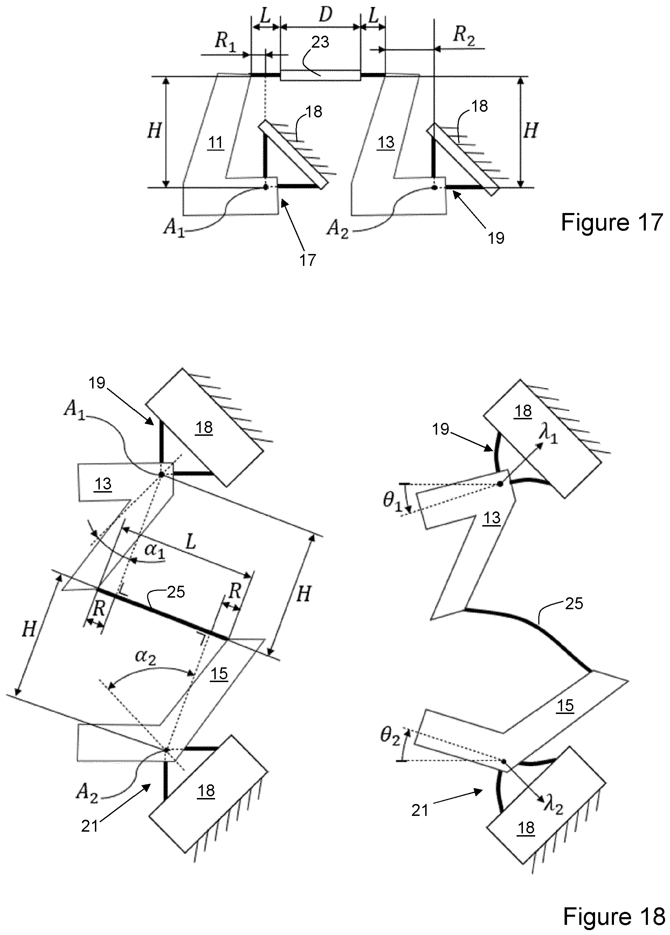

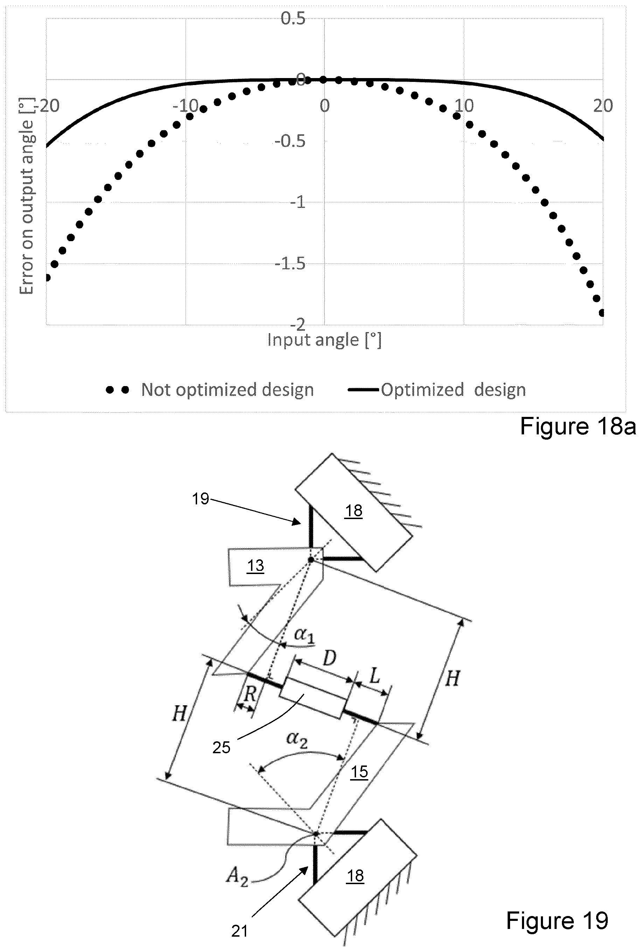

When the stage 1 is implemented with flexures (as in figures 8-12 and 14), the parasitic shift of the different flexures should be considered to minimize the parasitic shift of the whole stage 1. For parasitic shift minimization of the stage, the orientation of the two frame hinges 17, 19, 21, 22 of a linkage should be placed such that their respective parasitic centre shifts ($\lambda_1$ and $\lambda_2$) are equal in magnitude and their vector direction is parallel for a parallelogram linkage coupler (see figure 16), or mirrored with respect to the axis x for a Watt's linkage coupler (see figure 18). It is known that the parasitic centre shift of cross-spring flexure pivots is quadratic with respect to the rotation angle and directed along in the bisector of the beam axes. For both parallelogram and Watt's linkage couplers, the dimensions of the coupler should then be optimized to ensure an accurate angle transmission.

Figures 16 illustrates a parallelogram linkage coupler based on a single beam coupler 23 used to couple two rigid links 11, 13 (as in figures 1-2), in neutral and deformed positions. At neutral position, the single beam coupler 23 of length L is parallel to the line segment $A_1 A_2$ (where $A_1$ and $A_2$ are the effective centres of rotation of rigid links 11, 13 respectively). The distance between the single beam coupler 23 and the line segment $A_1 A_2$ is denoted by H, and the distances orthogonal to H between the points $A_1$ and $A_2$ and the respective extremities of the beam 23 are denoted by $R_1$ and $R_2$, respectively. To obtain a transmission ratio between the angles $\theta_1$ and $\theta_2$ as constant as possible and equal to 1, the following geometrical condition (obtained based on Euler-Bernoulli beam theory) should be respected:

$$\frac{R_1 - R_2}{L} = \frac{1}{6}$$

If this condition is not met, a second-order transmission error (i.e., $\theta_2 - \theta_1 \propto \theta_1^2$ ) is observed, as illustrated in the graph of figure 16a.

Figure 17 illustrates the case where the coupler 23 comprises a rigid bar of length D with two small blade flexures of equal length L, incorporated into the same parallelogram linkage coupler as illustrated in figure 16 instead of a simple blade flexure, the geometrical condition to obtain a transmission ratio between the angles $\theta_1$ and $\theta_2$ as constant as possible and equal to 1 is modified as follows (assuming L<<D):

$$\frac{R_1}{L} = \frac{1}{2}, \qquad \frac{R_2}{L} = -\frac{1}{2}$$

In such a case, the transmission ratio nonlinearity of the parallelogram coupler and the parasitic shift of the stage are theoretically of same order as its corresponding ideal kinematics presented in figures 1, 2 and 5.

Figure 18 illustrates a Watt's linkage coupler based on a single beam coupler 25 used to couple two rigid links 13, 15, as in the case of the linkage between the second 7 and third 9 arms in figures 3 and 4 (or the third 9 and fourth 10 arms in figure 6, for instance, the reference signs used here corresponding however to the embodiment of figures 3 and 4), in neutral and deformed positions, respectively. At the neutral position, the coupler 25 is a simple blade flexure of length L is parallel to the line segment $A_1A_2$ (where $A_1$ and $A_2$ are centers of rotation of frame hinges 19, 21 respectively). The distance between the simple blade flexure coupler 25 and the line segment $A_1A_2$ is denoted by H, and the distances orthogonal to H between the points $A_1$ and $A_2$ and the respective extremities of the blade flexure are equal and denoted by R. The angle between an axis orthogonal to the blade flexure 25 and the bisector of the flexures of the frame hinges 19 and 21 is denoted by $\alpha_1$ and $\alpha_2$, respectively. To obtain a transmission ratio between the angles $\theta_1$ and $\theta_2$ as constant as possible and equal to -1, the following geometrical conditions (obtained based on Euler-Bernoulli beam theory) should be respected to respectively nullify the second nonlinearity of the transmission ratio:

$$R = \frac{L}{6} - k \cdot (\sin \alpha_1 - \sin \alpha_2)$$

where $k$ is the second order coefficient of the parasitic translations $\lambda_1$ and $\lambda_2$ of the secondary flexure hinges assumed equal in magnitude (i.e., $\lambda_1 \cong \lambda_2 \cong k \cdot \theta_1^2 \cong k \cdot \theta_2^2$). If this latter condition is respected, then the transmission ratio of the Watt's linkage coupler is constant and equal to -1 up to the fourth order (i.e., $\theta_2 - \theta_1 \propto \theta_1^4$). If not, a second-order transmission error (i.e., $\theta_2 - \theta_1 \propto \theta_1^2$) is observed, as can clearly be seen in figure 18a. In this case, the transmission ratio nonlinearity of the Watt's linkage coupler and the parasitic shift of the movable element 3 are of same orders as its corresponding ideal kinematics presented in figures 3, 4, 6 and 7.

Figure 19 illustrates a variation of the arrangement of figure 18, in which coupler 23 is formed as a rigid beam of length $D$ with two small blade flexures of equal length $L$ is used in the Watt's linkage coupler instead of a single simple blade flexure as in figure 18. In this case, the geometrical condition to obtain a transmission ratio between the angles $\theta_1$ and $\theta_2$ as constant as possible and equal to 1 is modified as follows (assuming $L \ll D$):

$$\frac{R}{L} = \frac{1}{2}$$

In this case, the transmission ratio nonlinearity of the Watt's linkage coupler and the parasitic shift of the movable element 3 are of same orders as its corresponding ideal kinematics presented in figures 3, 4, 6 and 7.

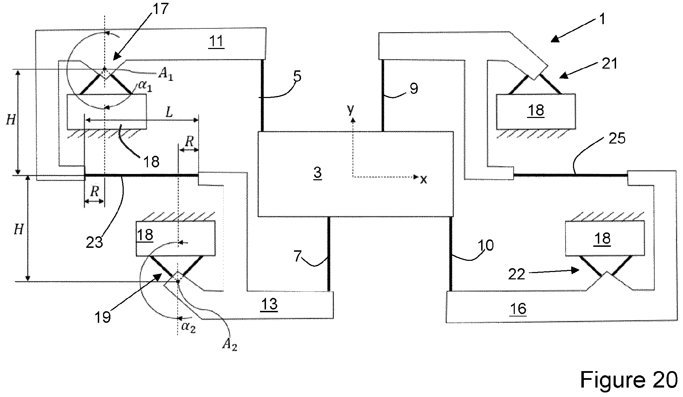

Figure 20 brings together the foregoing optimisations, and illustrates a complete rectilinear stage 1 applying the principles discussed to the overall configuration of figure 12.

This optimized rectilinear stage 1 constituted of two identical Watt's linkage couplers based on coupling beams 23, 25 and arms 5, 7, 9, 10 each formed as simple blade flexures, illustrated in a neutral position. First and second arms 5, 7 are not coaxial and are offset with respect to each other parallel to the X direction, as is the case for third and fourth arms 9, 10, which in the illustrated embodiment are offset with respect to each other by the same distance as the first and second arms 5, 7. However, provided that, in the neutral position, the distance parallel to the X axis between first frame hinge 17 and first arm 5 is the same as that between second frame hinge 19 and second arm 7, and, independently, the distance parallel to the X axis between third frame hinge 21 and third arm 9 is the same as that between fourth frame hinge 18 and fourth arm 10, the stage 1 will function correctly.

The optimization parameters are shown the first Watt's linkage formed by first rigid link 11, second rigid link 13 and first coupler 23. The geometry of the components of this Watt's linkage is chosen such that $\alpha_1 = \alpha_2 = 180°$, $R = L/6$ and $H = 2k$ to respect the optimization conditions. Note that the axis of the first coupler 23 is parallel to the x-axis (and is indeed coaxial therewith) to ensure that the direction of coupled frame hinges 17, 19 respectively 21, 22 are mirrored.

Figure 26 illustrates a flexure implementation of a rectilinear stage 1 as illustrated in figure 25, in its neutral position. In this implementation, the various frame hinges 17, 19, 21, 22, 33, 39 are cross spring flexure pivots, arms 5, 7, 9, 10 as well as first and second couplers 29, 35 are simple blade flexures, and first rigid link 11 and fourth rigid link 16 extend around their respective intermediate links 31, 37 such that the stage 1 is planar. Naturally, various equivalent flexures can be adopted as desired, as previously discussed.

In the neutral position, the couplers 29, 35 extend parallel to the arms 5, 7, 9, 10, and the couplers 23, 25 extend perpendicular thereto.

Although the invention has been described in terms of specific embodiments, variations thereto are possible without departing from the scope of the appended claims.

**Claims**

1. Rectilinear stage (1) with substantially a single degree of freedom in translation along a first axis (X), comprising:

   - a movable element (3) arranged to translate in a plane (XY) along said first axis (X) with respect to a frame (18);
   - a first arm (5) pivotally attached at its first extremity to said movable element (3) and at its second extremity to a first rigid link (11) arranged to pivot about a first frame hinge (17) provided on said frame (18);

- a second arm (7) pivotally attached at its first extremity to said movable element (3) and at its second extremity to a second rigid link (13) arranged to pivot about a second frame hinge (19) provided on said frame (18);

- a third arm (9) pivotally attached at its first extremity to said movable element (3) and at its second extremity to a third rigid link (15) arranged to pivot about a third frame hinge (21) provided on said frame (18);

wherein

- two of said arms (5, 7, 9) are attached on a first side of said movable element (3), a further one of said arms (5, 7, 9) being attached on a second side of said movable element (3) opposite to said first side, considered in said plane (XY);

- at least two of said arms (5, 7, 9) have substantially the same effective length;

- with said movable element (3) in a neutral position, said arms (5, 7, 9) functionally extend in mutually-parallel directions

- said first and second rigid links (11, 13) are rotationally coupled by a first coupler (23) pivotally connected to each of said first and second rigid links (11, 13),

- said third rigid link (15) is rotationally coupled to another rigid link (13, 16) by a second coupler (25) pivotally connected to each of said third rigid link (15) and said other rigid link (13, 16),

- said first arm (5), said second arm (7), said third arm (9), said first rigid link (11), said second rigid link (13), said third rigid link (15), said first coupler (23) and said second coupler (25) being configured such that an angle of rotation of each of said rigid links (11, 13, 15) about its respective frame hinge (17, 19, 21) is of substantially equal magnitude in response to a displacement of said movable element (3) along said first axis (X).

2. Rectilinear stage (1) according to the preceding claim, wherein said first arm (5) and said second arm (7) are attached to said first side of said movable element (3) and said third arm (9) is attached to said second side of said movable element (3), considered in said plane (XY), said first coupler (23) linking said first rigid link (11) to said second rigid link (13), and said second coupler (25) linking said third rigid link (15) to said second rigid link (13).

3. Rectilinear stage (1) according to the preceding claim, wherein said first rigid link (11), said second rigid link (13) and said first coupler (23) are arranged as a parallelogram linkage.

4. Rectilinear stage (1) according to one of claims 2 or 3, wherein said second rigid link (13), said third rigid link (15) and said second coupler (25) are arranged as a parallelogram linkage or as an inverter linkage such as a Watt's Linkage or Kempe's Reversor.

5. Rectilinear stage (1) according to one of claims 2-4, wherein said arms (5, 7, 9) extend perpendicular to said first axis (X) and said first coupler (23) extends parallel to said first axis (X), when said movable element (3) is in a neutral position.

6. Rectilinear (1) stage according to claim 1, wherein said first arm (5) and said second arm (7) are attached to opposite sides of said movable element (3), considered in said plane (XY), and wherein said rectilinear stage (1) further comprises a fourth arm (10) attached at its first extremity to said movable element (3) and at its second extremity to a fourth rigid link (16) arranged to pivot about a fourth frame hinge (22) provided on said frame, said second coupler (25) being pivotally attached to each of said third rigid link (15) and said fourth rigid link (16).

7. Rectilinear stage (1) according to claim 6, wherein said first rigid link (11), said second rigid link (13) and said first coupler (23) are configured as a parallelogram linkage, and wherein said third rigid link (15), said fourth rigid link (16) and said second coupler (25) are also configured as a parallelogram linkage.

8. Rectilinear stage (1) according to claim 6, wherein said first rigid link (11), said second rigid link (13) and said first coupler (23) are configured as an inverter linkage such as a Watt's Linkage or a Kempe's Reversor, and wherein said third rigid link (15), said fourth rigid link (16) and said second coupler (25) are also configured as an inverter linkage such as a Watt's Linkage or a Kempe's Reversor.

9. Rectilinear stage (1) according to claim 4 or 8, wherein said inverter linkage is a Kempe's Reversor, comprising an auxiliary coupling link (29, 35) pivotably joining said respective coupler (23, 25) to the corresponding rigid link (13, 16), and a corresponding intermediate link (31, 37) pivotally attached to said respective coupler (23, 25) and to a respective intermediate frame hinge (33, 39) distinct from said frame hinges (17, 19, 21, 22) and arranged substantially in a straight line with the corresponding frame hinges (17, 19, 21, 22).

10. Rectilinear stage (1) according to claim 9, wherein said intermediate frame hinge (33, 39) is situated between said corresponding frame hinges (17, 19; 21, 22), the pivot points of said Kempe's Reversor defining two squares when said movable element (3) is in a neutral position.

11. Rectilinear stage (1) according to claim 9, wherein said intermediate frame hinge (33, 39) is situated outside of said corresponding frame hinges (17, 19; 21, 22), the pivot points of said Kempe's Reversor defining two similar isosceles trapezoids when said movable element (3) is in a neutral position.

12. Rectilinear stage (1) according to one of claims 6-8, or 9-11 as dependent on one of claims 6 or 7, wherein said first coupler (23) and said second coupler (25) are substantially parallel when said movable element (3) is in a neutral position.

13. Rectilinear stage (1) according to one of claims 6-8, or 9-11 as dependent on one of claims 6 or 7, wherein said first coupler (23) and said second coupler (25) are substantially mirrored with respect to each other about a second axis (Y) perpendicular to said first axis (X), when said movable element (3) is in a neutral position.

14. Rectilinear stage (1) according to one of claims 6-8, or 9-13 as dependent on one of claims 6 or 7, wherein said arms (5, 7, 9, 10) extend perpendicular to said first axis (X) when said movable element (3) is in a neutral position.

15. Rectilinear stage (1) according to any preceding claim, wherein said arms (5, 7, 9, 10) and said couplers (23, 25) are each one of: a simple blade flexure; a rigid bar provided with a flexure pivot at each extremity thereof, and/or said frame hinges (17, 19, 21, 22) are configured as flexure pivots, preferably cross-spring flexure pivots.

16. Rectilinear stage (1) according to any preceding claim, wherein, with said movable element (3) in a neutral position and for each of said arms (5, 7, 9, 10), a line segment joining each effective pivot point of said arm (5, 7, 9, 10) is substantially perpendicular to a line segment joining the effective pivot point of said arm on said corresponding rigid link (11, 13, 15, 16) and the effective pivot point of the corresponding frame hinge (17, 19, 21, 22) about which said corresponding rigid link (11, 13, 15, 16) pivots.

Figure 1

Figure 2

Figure 3

Figure 4

Figure 5

Figure 6

Figure 7

Figure 8

Figure 9

Figure 10

Figure 11

Figure 12

(a)     (b)     (c)     (d)     (e)     (f)

Figure 13

Figure 14

Figure 15

Figure 16

Figure 16a

Figure 17

Figure 18

Figure 18a

Figure 19

Figure 20

Figure 21

Figure 22

Figure 23

Figure 24

Figure 25

Figure 26

**EUROPEAN SEARCH REPORT**

Application Number

EP 24 21 8366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BELLOUARD Y ET AL: "High Accuracy Micro-Displacement Sensor With Integrated Optics-based Detection Means", ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18 April 2005 (2005-04-18), pages 850-854, XP010872104, DOI: 10.1109/ROBOT.2005.1570223 ISBN: 978-0-7803-8914-4 * page 850 - page 854; figures 4-7 * | 1-16 | INV. B25J9/00 B25J9/16 B25J9/10 |

TECHNICAL FIELDS
SEARCHED      (IPC)

B25J

The present search report has been drawn up for all claims

| Place of search | Date of completion of the search | Examiner |
|---|---|---|
| The Hague | 3 June 2025 | Hutter, Manfred |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **COSANDIER F ; HENEIN S ; RICHARD M ; RUBBERT L**. The Art of Flexure Mechanism Design. EPFL Press, 2017
- **TISSOT-DAGUETTE L ; SCHNEEGANS H ; GUBLER Q ; BAUR C ; HENEIN S**. Rectilinear translation four-bar flexure mechanism based on four Remote Center Compliance pivots,. *euspen's 22nd International Conference & Exhibition*, 2022
- **HUBBARD N B ; WITTWER J W ; KENNEDY J A ; WILCOX D L ; HOWELL L L**. A novel fully compliant planar linear-motion mechanism. *ASME 2004 International Design Engineering Technical Conferences and Computers and Information in Engineering Conference*, 2004
- **KEMPE ; ALFRED BRAY**. How to draw a straight line: a lecture on linkages. *Macmillan and Company*, vol. 1877, 40-41